# FASCICULE DE BREVET EUROPEEN

(11) **EP 1 053 780 B1**
(45) Date de publication et mention de la délivrance du brevet: **18.05.2005**
(21) Numéro de dépôt: 00401296.9
(22) Date de dépôt: 11.05.2000
(51) Int. Cl.: B01F 17/00

(54) **Procédé de fabrication de compositions utilisables comme agents de surface émulsifiants et dispersants**
Verfahren zur Herstellung von Zusammensetzungen verwendbar als oberflächenaktive Emulgier- und Dispergiermittel
Method for making compositions useful as surface-active emulsifying and dispersing agents

(30) Priorité: 19.05.1999 FR 9906448
(43) Date de publication de la demande: 22.11.2000
(73) Titulaire: Institut Français du Pétrole, 92852 Rueil-Malmaison Cedex (FR)
(72) Inventeur: Hillion, Gérard, 95220 Herblay (FR); Durand, Isabelle, 92500 Rueil-Malmaison (FR); Sinquin, Anne, 92000 Nanterre (FR); Velly, Marie, 78360 Montesson (FR)

(56) Documents cités:
- EP-A- 1 053 781
- FR-A- 2 768 732

## Description

L'invention concerne un nouveau procédé de fabrication de compositions utilisables comme agents de surface émulsifiants et dispersants.

Dans la demande de brevet français FR-A-2 768 732, la demanderesse a décrit un procédé pour la fabrication d'une composition consistant en un mélange comprenant au moins des amides, des amines, des ester-amides, des ester-amines, des sels d'amines et des monoglycérides, dérivant d'acides gras monomères, dimères, trimères et/ou tétramères contenus dans une huile polyinsaturée polymérisée, ce procédé comprenant la réaction de transamidification (et de transestérification) d'une huile polyinsaturée polymérisée thermiquement, avec au moins un aminoalcool, utilisé en excès.

La composition obtenue pouvait être utilisée, sans aucune purification, comme agent de surface émulsifiant et dispersant, telle quelle ou après dilution avec divers solvants, comme par exemple des coupes aromatiques, divers alcools ou encore certains esters d'acides gras.

Il était indiqué que les compositions ainsi définies pouvaient trouver un grand nombre d'applications, par exemple comme agents émulsifiants permettant de former des émulsions huile-dans-eau ou eau-dans-huile, selon la nature de l'huile et les proportions respectives des deux constituants (le constituant hydrophile et le constituant hydrophobe). Elles pouvaient encore être utilisées comme agents dispersants de solides ou comme stabilisants de mousses dans un liquide ou dans une émulsion. Une utilisation particulière signalée consistait à former des dispersions stables de glace dans des milieux hydrocarbonés, par exemple dans des condensats légers de pétrole.

La demande de brevet français FR-A-2 768 637 décrit une autre application particulière des compositions préparées selon le procédé de la demande de brevet français FR-A-2 768 732. Cette application consiste à les utiliser comme additifs dispersants d'hydrates en suspension au sein de fluides comprenant au moins de l'eau, un gaz et un hydrocarbure liquide (dans des conditions où des hydrates peuvent se former à partir de l'eau et du gaz), de manière à en faciliter le transport.

On a maintenant trouvé de façon surprenante qu'il était possible d'améliorer les propriétés de ces compositions en soumettant l'huile polymérisée, avant réaction avec l'aminoalcool, à une opération d'entraînement à la vapeur d'eau ayant pour effet une désodorisation de l'huile polymérisée et l'élimination des produits de dégradation qui pourraient être présents dans les huiles polymérisées et poser des problèmes vis-à-vis de certains milieux dans lesquels les compositions finales peuvent être utilisées.

L'invention propose donc un nouveau procédé de préparation de compositions utilisables comme agents de surface émulsifiants et dispersants défini par le fait qu'il comprend les étapes suivantes :
a) on dispose de (ou on prépare) une huile polymérisée par polymérisation d'une huile végétale ou animale polyinsaturée ;
b) on traite ladite huile polymérisée par entraînement à la vapeur d'eau ; et
c) on fait réagir l'huile polymérisée ainsi traitée avec un excès d'au moins un aminoalcool dont au moins une fonction amine est primaire ou secondaire, en présence ou non de catalyseur.

Pour préparer les compositions de l'invention, on peut se servir d'une huile polyinsaturée polymérisée du commerce, telle que les produits connus sous les dénominations de « standolie », « stand oils » ou « bodied oils ». Dans ce cas, on effectue directement l'étape (b) du procédé.

De manière différente, si dans l'étape (a) on doit préparer l'huile polymérisée, on peut partir de toute huile végétale ou animale présentant un degré de polyinsaturation suffisant pour en permettre la polymérisation, par contact des chaînes grasses diéniques ou trièniques entre elles, comme c'est le cas par exemple pour l'acide linoléique et linolénique. On citera comme exemples les huiles de lin, de tournesol, de carthame, de bois de chine, de pépin de raisin, de soja ou de maïs, ou certaines huiles de poisson, ainsi que toutes autres huiles possédant des teneurs élevées en acide linoléique et/ou linolénique. L'huile de lin est préférée dans le procédé de l'invention.

Une composition approximative en acides gras de l'huile de lin est la suivante :
- acide palmitique : 5,5 % en poids
- acide stéarique : 3,5 % en poids
- acide oléique : 19,0 % en poids
- acide linoléique : 14,4 % en poids
- acide linolénique : 57,6 % en poids

La polymérisation d'une huile polyinsaturée peut être effectuée selon toute méthode appropriée, thermiquement ou par voie catalytique. La polymérisation par voie essentiellement thermique peut être réalisée par simple chauffage à environ 300 °C sous azote. Le temps de chauffage conditionne alors un gradient de viscosité de l'huile polymérisée, qui peut atteindre, après un temps de chauffage par exemple de 20 heures ou plus, une viscosité dynamique de 65 Pa.s à 20 °C.

La polymérisation peut également être réalisée à 280-290 °C sous pression réduite en présence d'anthraquinone ou de benzoquinone (voir Nisshin Oils Mills, Yokohama, Japan, Nagakura and Coll. (1975), 48 (4), 217-22).

Lorsque l'on prépare l'huile polyinsaturée polymérisée utilisée dans le procédé de fabrication selon l'invention, pour réduire la durée de la polymérisation et donc le risque de former des produits de dégradation indésirables, on peut aussi prévoir de catalyser la polymérisation de l'huile polyinsaturée de départ par des métaux, comme par exemple le zinc, le plomb, l'étain ou le cuivre, sous la forme de nitrates, de chlorures ou de stéarates, ou encore le manganèse sous la forme d'oxyde ou d'un sel. A cet égard, on peut citer par exemple le chauffage pendant 6 heures de l'huile de lin avec du nitrate de cuivre (II) en une proportion de 0,5 à 2 % en poids par rapport à l'huile de départ décrit par Sil S. and Koley S. N., Department of Chemical Technology, Univ. of Calcutta (1987) 37(8), 15-22].

Parmi les catalyseurs métalliques mis en jeu pour diminuer la durée de la réaction, il peut être avantageux d'utiliser un sel ou le dioxyde de manganèse MnO₂, par exemple en une proportion de 0,5 à 2 % en poids par rapport à l'huile de départ. De tels catalyseurs peuvent en effet être laissés dans le produit final sans que cela entraîne des problèmes de toxicité ou de compatibilité avec les milieux dans lesquels l'additif sera finalement utilisé.

Dans tous les cas, pour pouvoir être utilisées dans le procédé de fabrication selon l'invention, les huiles polymérisées ont avantageusement une viscosité dynamique à 20 °C de 5 à 65 Pa.s et de préférence de 10 à 20 Pa.s. Elles présentent en général un indice d'acide de 8 à 20. Des viscosités analogues sont généralement conservées après le traitement d'entraînement à la vapeur d'eau de l'étape (b), tel qu'il sera décrit plus loin. Quant à l'indice d'acide, il est généralement abaissé par ce traitement.

On donne ci-après, à titre d'exemple, la composition des oligomères d'acides gras contenus dans une huile de lin polymérisée possédant une viscosité dynamique à 20 °C de 65 Pa.s :
- acides gras monomères : 44,10 % en poids
- acides gras dimères : 32,30 % en poids
- acides gras trimères : 14,50 % en poids
- oligomères supérieurs : 9,10 % en poids

Ces valeurs ont été obtenues après méthanolyse de l'huile polymérisée et la séparation des esters de méthyle des différents acides gras (monomères, dimères, trimères et oligomères supérieurs) a été réalisée par chromatographie par perméation sur gel (GPC). L'indice d'acide de l'huile polymérisée est égal à 16 mg de KOH/g.

Le produit de la réaction de polymérisation, après méthanolyse, peut être purifié par distillation afin d'en éliminer la fraction d'esters correspondant aux acides gras monomères. On obtient alors un mélange qui comprend environ 1 % d'acides monomères, environ 75 % d'acides dimères, environ 19 % d'acides trimères et environ 5 % d'oligomères supérieurs.

Dans l'étape (b) du procédé de l'invention, on soumet l'huile polymérisée dont on dispose ou telle qu'obtenue à l'issue de l'étape (a) à un entraînement à la vapeur d'eau.

Pour réaliser ce traitement, on fait passer sur l'huile polymérisée à traiter un courant de vapeur d'eau sèche en une quantité de 5 à 30 % en poids par rapport à l'huile, par exemple à une température de 180 à 250 °C, sous un vide de 7 à 2,5 kPa et pendant une durée de 1 à 5 heures.

La réaction d'amidification des acides gras par les fonctions amines primaires ou secondaires des aminoalcools mis en jeu dans l'étape (c) du procédé de l'invention, accompagnée de la réaction de transestérification des fonctions esters de glycérol par les fonctions alcools desdits aminoalcools est connue de l'art antérieur et peut être effectuée à une température de 100 à 200 °C et de préférence 110 à 160 °C, de préférence sans catalyseur avec élimination de l'eau au fur et à mesure qu'elle se forme, soit par utilisation d'un tiers solvant pour obtenir un azéotrope, soit par opération sans solvant, mais par élimination de l'eau par distillation sous pression réduite (voir par exemple le brevet US-A-2 089 212 et l'article de Harry Kroll et Herbert Nadeau dans J.A.O.C.S. 34, 323-326, juin 1957). La réaction peut également être catalysée, ce qui diminue sensiblement sa durée. Comme catalyseurs, on utilise généralement des alcoolates alcalins de type méthylate ou éthylate de lithium, sodium ou potassium. Le temps de réaction est alors de 15 à 200 minutes ; de préférence, la réaction est arrêtée après 100 minutes.

Le rapport molaire de l'aminoalcool sur l'huile polymérisée, ramenée aux moles d'acides gras qu'elle contient, est en général de 1/1 à 2/1, de préférence de l'ordre de 1,5/1.

Les aminoalcools susceptibles d'être utilisés sont par exemple la monoéthanolamine, la monopropanolamine, la monoisopropanolamine, le 1-amino-butanol, le 2-amino-1-butanol, la N-méthyléthanolamine, la N-butyléthanolamine, la pentanolamine, l'hexanolamine, la cyclohexanolamine, les polyalcoolamines, ou encore les polyalcoxyglycolamines, ainsi que les polyols aminés tels que la diéthanolamine, la diisopropanolamine ou le trihydroxyméthylaminométhane. De préférence, on utilisera la diéthanolamine.

Le produit obtenu par le procédé de l'invention consiste en une composition comprenant principalement des composés à fonctions esters et amides, notamment sous forme d'ester-amides, ainsi que des composés à fonctions amines, tels que des ester-amines, des sels d'amines, des monoglycérides et des diglycérides, formés à partir des acides gras monomères, dimères, trimères et/ou tétramères contenus dans l'huile polyinsaturée polymérisée. Il peut être utilisé directement sans aucune purification, soit tel quel, soit après dilution dans un solvant adapté à l'application émulsifiante choisie. Les solvants compatibles utilisables peuvent être choisis parmi les solvants aromatiques, comme par exemple le toluène ou les xylènes, les coupes de solvants aromatiques ; les monoalcools, comme par exemple le méthanol, l'éthanol, le propanol, l'isopropanol, le butanol, l'isobutanol ou le dodécanol ; les diols comme par exemple le monopropylène glycol ou le diéthylène glycol ; et tous esters de monoalcools de C1 à C4 et d'acides gras de C6 à C22, comme par exemple ceux dérivant d'huiles ou de graisses végétales ou animales, ainsi que les mêmes esters purs, tels que par exemple l'hexanoate et l'octoate de méthyle ou d'éthyle.

Les esters de monoalcools de C1 à C4 et d'acides gras de C6 à C22 dérivant d'huiles ou de graisses végétales ou animales peuvent être choisis par exemple parmi les esters méthylique et éthylique des huiles de coprah, de babassu, de palmiste, de tucum, de murumuru, de palme, de karité, d'olive, d'arachide, de kapok, de datte amère, de papayer, de coloquinte, de croton, de souchet, d'épurge, de chanvre, de hêtre, de ketmie, de pulghère, de cameline, de carthame, de niger, de tournesol, de tournesol oléique, d'hévéa, de coco, de purga, de noix, de maïs, de soja, de coton, de sorgho, de pépin de raisin, de lin, de tabac, de pin commun, d'afzellie, de chou navet, de sénevé, de moutarde brune, de bois de chine, de bancoulier, d'aleurite, d'amoora, de sapin, de cramble, de périlla, de colza érucique, de colza nouveau, de colza oléique, de sésame, de beurre de cacao, de tall oil, de germe de blé et de ricin, ainsi que de certaines huiles de poisson ; et parmi les esters méthylique et éthylique de graisses telles que le saindoux, le suif et le beurre fondu, en l'état ou partiellement hydrogénées.

Dans certaines applications où il peut y avoir un contact avec l'environnement, l'usage de solvants aromatiques devra être évité au profit de l'emploi de solvants présentant une non-toxicité et une certaine biodégradabilité ; dans ce cas, on utilisera avantageusement comme solvants des esters gras issus de bases végétales, comme par exemple de l'ester méthylique ou éthylique d'huile de colza.

Les compositions obtenues par le procédé de l'invention trouvent une utilisation particulière comme additifs dispersants d'hydrates dans des effluents pétroliers destinés à réduire la tendance à l'agglomération desdits hydrates. Dans cette utilisation, ces compositions sont ajoutées dans le fluide à traiter à des concentrations allant en général de 0,1 à 5 % en masse, de préférence de 0,2 à 2 % en masse, par rapport à l'eau.

Les exemples suivants illustrent l'invention mais ne doivent en aucune manière être considérés comme limitatifs. L'Exemple 3 est donné à titre de comparaison.

### EXEMPLE 1

Dans un ballon d'un litre pouvant tenir au vide, équipé d'un système d'agitation mécanique et pouvant être chauffé par l'intermédiaire d'un bain d'huile, on introduit sous atmosphère d'azote 325 g d'huile de lin polymérisée (ce qui correspond à 0,37 mole d'équivalents triglycérides), présentant une viscosité dynamique de 10 Pa.s à 20 °C

Cette huile polymérisée a la composition suivante en acides gras et oligomères d'acides gras :
- acides gras monomères : 48,8 % en poids
- acides gras dimères : 31,4 % en poids
- acides gras trimères : 13,0 % en poids
- oligomères supérieurs : 5,8 % en poids

Son indice d'acide est égal à 10.

On amène le produit à une température de 230 °C, sous un vide dynamique de 0,25 à 0,40 kPa. Dans le produit agité à 230 °C, on introduit lentement de la vapeur d'eau sèche par l'intermédiaire d'un tube plongeant. Le vide est stabilisé à une valeur de 4,70 kPa par un réglage fin du débit de vapeur d'eau introduit. Après 2 heures de traitement, on recueille dans un piège à vide immergé dans de l'azote liquide, 22,5 g d'eau ainsi que 0,27 g d'une fraction organique insoluble. On casse le vide dans l'appareillage par de l'azote et on refroidit le produit vers 160 °C.

La composition en acides gras et oligomères d'acides gras de l'huile polymérisée après ce traitement n'a pas changé. Son indice d'acide est de 6,3.

On ajoute alors 175 g (soit 1,66 moles) de diéthanolamine. Après 15 à 20 minutes de réaction à 160 °C, le produit devient homogène et limpide. On maintient cette température de 160 °C pendant 100 minutes avant de refroidir le mélange.

On dilue le produit dans le ballon de réaction en y introduisant 500 g d'une coupe d'aromatiques dont l'intervalle de distillation est compris entre 180 et 215 °C.

Le mélange ainsi obtenu est un liquide jaune présentant une densité à 25 °C de 0,950, une viscosité dynamique à 20 °C d'environ 0,2 Pa.s, un point éclair supérieur à 60 °C et un point d'écoulement inférieur à 20 °C.

### EXEMPLE 2

Dans un ballon d'un litre, agité et chauffé, on introduit 440 g d'huile de lin raffinée (0,5 mole, comptée en équivalents triglycérides) et 4,4 g d'oxyde de manganèse réduit en poudre. On purge l'appareillage de son air par passage d'un courant d'azote et on chauffe sous agitation le mélange formé jusqu'à environ 290-300 °C. Après 5 heures de réaction, la viscosité du mélange atteint 9,7 Pa.s. On refroidit vers 120°C sous atmosphère d'azote et on élimine l'oxyde de manganèse insoluble par filtration. Une partie du métal utilisé a été transformé en savon de manganèse soluble, qui peut être laissé dans le produit.

L'huile de lin polymérisée a la composition suivante en acides gras et en oligomères d'acides gras :
- acides gras monomères : 47,9 % en poids
- acides gras dimères : 27,4 % en poids
- acides gras trimères : 11,3 % en poids
- oligomères supérieurs : 13,4 % en poids

Son indice d'acide est de 8,5.

Sur ce produit brut, on réalise un entraînement à la vapeur d'eau dans les mêmes conditions que dans l'Exemple 1. La composition en acides gras et en oligomères d'acides gras du produit obtenu reste inchangée, mais son indice d'acide est de 5,1.

On poursuit la préparation du produit comme décrit dans l'Exemple 1.

On dilue le produit obtenu dans le ballon de réaction en y introduisant 500 g d'une coupe d'aromatiques dont l'intervalle de distillation est compris entre 180 et 215 °C.

Le mélange ainsi obtenu présente une densité à 25 °C de 0,950, une viscosité dynamique à 20 °C d'environ 0,20 Pa.s, un point éclair supérieur à 60 °C et un point d'écoulement inférieur à 20 °C.

Dans les exemples suivants on teste l'efficacité des produits préparés comme décrit les Exemples 1 et 2 en tant qu'additifs pour disperser les hydrates dans un effluent pétrolier. On a simulé le transport de fluides formant des hydrates, tels que des effluents pétroliers et on a procédé à des essais de formation d'hydrates à partir de gaz, de condensat et d'eau, à l'aide de l'appareillage décrit ci-après.

L'appareillage comporte une boucle de 10 mètres constituée de tubes de diamètre intérieur égal à 7,7 mm ; un réacteur de 2 litres comprenant une entrée et une sortie pour le gaz, une aspiration et un refoulement pour le mélange : condensat, eau et additif initialement introduit. Le réacteur permet de mettre la boucle sous pression.

Des tubes de diamètre analogue à ceux de la boucle assurent la circulation des fluides de la boucle au réacteur, et inversement, par l'intermédiaire d'une pompe à engrenages placée entre les deux. Une cellule saphir intégrée dans le circuit permet une visualisation du liquide en circulation, et donc des hydrates, s'ils se sont formés.

Pour déterminer l'efficacité des additifs selon l'invention, on introduit les fluides (eau, huile, additif) dans le réacteur ; l'installation est ensuite portée sous une pression de 70 bar. L'homogénéisation des liquides est assurée par leur circulation dans la boucle et le réacteur, puis uniquement dans la boucle. En suivant les variations de perte de charge et de débit, on impose une rapide diminution de la température, de 17°C à 4 °C (température inférieure à la température de formation des hydrates), celle-ci est ensuite maintenue à cette valeur.

La durée des tests peut varier de quelques minutes à plusieurs heures : un additif performant permet de maintenir la circulation de la suspension d'hydrates avec une perte de charge et un débit stables.

### EXEMPLE 3 (comparatif)

Dans cet exemple, on opère avec un fluide composé en volume de 10 % d'eau et de 90 % de condensat.

La composition pondérale du condensat est :
- pour les molécules ayant moins de 11 atomes de carbone: 20 % de paraffines et d'isoparaffines, 48 % de naphtènes, 10 % d'aromatiques ; et
- pour les molécules ayant au moins 11 atomes de carbone : 22 % d'un mélange de paraffines, d'isoparaffines, de naphtènes et d'aromatiques.

Le gaz utilisé comprend en volume 98 % de méthane et 2 % d'éthane. L'expérimentation est conduite sous une pression de 7 MPa, maintenue constante par apport de gaz. Dans ces conditions, on observe la formation d'un bouchon dans le serpentin, quelques minutes après le début de la formation des hydrates (à une température d'environ 10,8°C) : les hydrates forment un bloc et la circulation du fluide devient impossible.

### EXEMPLE 4

Dans cet exemple, on opère comme dans l'Exemple 3 comparatif, avec le même fluide, le même gaz, et à la même pression, mais on ajoute au fluide en circulation 1 % en masse par rapport à l'eau du produit fabriqué dans l'Exemple 1. Dans ces conditions, on observe une augmentation de la perte de charge lors de la formation des hydrates (à une température d'environ 10°C), suivie de sa diminution et de sa stabilisation pendant plus de 24 heures à une température de 4°C. Une descente en température à 0 °C n'affecte pas la circulation de la suspension, les hydrates restant dispersés dans les fluides.

### EXEMPLE 5

Dans cet exemple, on opère comme dans l'Exemple 3 comparatif, avec le même fluide, le même gaz, et à la même pression, mais on ajoute au fluide en circulation 1 % en masse par rapport à l'eau du produit fabriqué dans l'Exemple 2. Dans ces conditions, on observe une augmentation de la perte de charge lors de la formation des hydrates (à une température d'environ 10°C), suivie de sa diminution et de sa stabilisation pendant plus de 24 heures à une température de 4 °C. Une descente en température à 0 °C n'affecte pas la circulation de la suspension, les hydrates restant dispersés dans les fluides.

## Revendications

1. Procédé de fabrication d'une composition comprenant principalement des composés à fonctions esters et amides, notamment sous forme d'ester-amides, ainsi que des composés à fonctions amines, tels que des ester-amines, des sels d'amines, des monoglycérides et des diglycérides, formés à partir des acides gras monomères, dimères, trimères et/ou tétramères contenus dans une huile polyinsaturée polymérisée, ledit procédé étant **caractérisé en ce qu'**il comprend les étapes suivantes :
a) on dispose de (ou on prépare) une huile polymérisée par polymérisation d'une huile végétale ou animale polyinsaturée ;
b) on traite ladite huile polymérisée par entraînement à la vapeur d'eau ; et
c) on fait réagir l'huile polymérisée ainsi traitée avec un excès d'au moins un aminoalcool dont au moins une fonction amine est primaire ou secondaire, en présence ou non de catalyseur.

2. Procédé selon la revendication 1 **caractérisé en ce que**, dans l'étape (a), on prépare une huile polymérisée par polymérisation d'une huile végétale ou animale à teneur élevée en acides polyinsaturés, ladite huile polymérisée présentant une viscosité dynamique de 5 à 65 Pa.s à 20 °C.

3. Procédé selon la revendication 1 ou 2 **caractérisé en ce que** dans l'étape (a), l'huile polymérisée est obtenue par polymérisation thermique.

4. Procédé selon la revendication 1 ou 2 **caractérisé en ce que** dans l'étape (a), l'huile polymérisée est obtenue par polymérisation catalytique.

5. Procédé selon la revendication 4 **caractérisé en ce que** le catalyseur utilisé est le dioxyde de manganèse.

6. Procédé selon l'une des revendications 1 à 5 **caractérisé en ce que** l'huile polyinsaturée de départ est de l'huile de lin.

7. Procédé selon la revendication 1 à 6 **caractérisé en ce que**, dans l'étape (b), on fait passer sur l'huile polymérisée un courant de vapeur d'eau sèche en une quantité de 5 à 30 % en poids par rapport à l'huile, à une température de 180 à 250 °C, sous un vide de 7 à 2,5 kPa et pendant une durée de 1 à 5 heures.

8. Procédé selon l'une des revendications 1 à 7 **caractérisé en ce que**, dans l'étape (c), le rapport molaire de l'aminoalcool à l'huile polymérisée, ramenée aux moles d'acides gras qu'elle contient, est de 1/1 à 2/1.

9. Procédé selon l'une des revendications 1 à 8 **caractérisé en ce que** le produit de la réaction de l'étape (c), est dilué dans un solvant.

10. Procédé selon la revendication 9 **caractérisé en ce que** ledit solvant est choisi parmi les solvants aromatiques, les coupes de solvants aromatiques; les monoalcools, les diols, tous esters de monoalcools de C1 à C4 et d'acides gras de C6 à C22, dérivant d'huiles ou de graisses végétales ou animales, ainsi que les mêmes esters purs.

11. Procédé selon l'une des revendications 1 à 10 **caractérisé en ce que** l'aminoalcool utilisé dans l'étape (c) est la diéthanolamine.

12. Procédé selon l'une des revendications de 1 à 11 **caractérisé en ce que**, dans l'étape (c), la réaction est achevée après un temps de chauffage de 15 à 200 minutes.

13. Procédé selon l'une des revendications de 1 à 12 **caractérisé en ce que**, dans l'étape (c), la température de réaction est de 100 à 200 °C.

## Patentansprüche

1. Verfahren zur Herstellung einer Zusammensetzung, hauptsächlich umfassend Verbindungen mit Ester- und Amidfunktionen, insbesondere in Form von Esteramiden sowie Verbindungen mit Aminfunktionen wie Esteraminen, Aminsalzen, Monoglyceride und Diglyceride, gebildet ausgehend von monomeren, dimeren, trimeren und/oder tetrameren Fettsäuren, die in einem polymerisierten polyungesättigten Öl enthalten sind, wobei das Verfahren **dadurch gekennzeichnet ist, dass** es die folgenden Stufen umfasst:
a) man verfügt über (oder man stellt her) ein polymerisiertes Öl durch Polymerisation eines pflanzlichen oder tierischen polyungesättigten Öls;
b) man behandelt das polymerisierte Öl durch Mitziehen mit Wasserdampf; und
c) man lässt das so behandelte polymerisierte Öl mit einem Überschuss wenigstens eines Aminoalkohols reagieren, bei dem wenigstens eine Aminfuktion primär oder sekundär ist, gegebenenfalls in Gegenwart von Katalysator.

2. Verfahren nach Anspruch 1, **dadurch gekennzeichnet, dass** man in der Stufe (a) ein durch Polymerisation eines pflanzlichen oder tierischen Öls mit hohem Gehalt an polyungesättigten Säuren polymerisiertes Öl herstellt, wobei das polymerisierte Öl eine dynamische Viskosität von 5 bis 65 Pa.s bei 20°C aufweist.

3. Verfahren nach Anspruch 1 oder 2, **dadurch gekennzeichnet, dass** bei der Stufe (a) das polymerisierte Öl durch thermische Polymerisation erhalten wird.

4. Verfahren nach Anspruch 1 oder 2, **dadurch gekennzeichnet, dass** in der Stufe (a) das polymerisierte Öl durch katalytische Polymerisation erhalten wird.

5. Verfahren nach Anspruch 4, **dadurch gekennzeichnet, dass** der verwendete Katalysator Mangandioxid ist.

6. Verfahren nach einem der Ansprüche 1 bis 5, **dadurch gekennzeichnet, dass** das polyungesättigte Ausgangsöl Leinöl ist.

7. Verfahren nach einem der Ansprüche 1 bis 6, **dadurch gekennzeichnet, dass** man in der Stufe (b) auf dem polymerisierten Öl einen trockenen Wasserdampfstrom in einer Menge von 5 bis 30 Gew.-% im Verhältnis zum ÖL bei einer Temperatur von 180 bis 250°C unter einem Vakuum von 7 bis 2,5 kPa und für eine Dauer von 1 bis 5 Stunden passieren lässt.

8. Verfahren nach einem der Ansprüche 1 bis 7, **dadurch gekennzeichnet, dass** in der Stufe (c) das Molverhältnis des Aminoalkohols zum polymerisierten Öl zurückgeführt auf Fettsäuremolanteile, die es enthält 1/1 bis 2/1 ist.

9. Verfahren nach einem der Ansprüche 1 bis 8, **dadurch gekennzeichnet, dass** das Reaktionsprodukt der Stufe (c) in einem Lösungsmittel verdünnt wird.

10. Verfahren nach Anspruch 9, **dadurch gekennzeichnet, dass** das Lösungsmittel gewählt wird unter den aromatischen Lösungsmitteln, den aromatischen Lösungsmittelfraktionen, den Monoalkoholen, den Diolen, allen Estern von C1- bis C4-Monoalkoholen und C6- bis C22-Fettsäuren, abgeleitet von Ölen oder Fetten, pflanzlich oder tierisch sowie denselben reinen Estern.

11. Verfahren nach einem der Ansprüche 1 bis 10, **dadurch gekennzeichnet, dass** der in Stufe (c) verwendete Aminoalkohol Diethanolamin ist.

12. Verfahren nach einem der Ansprüche 1 bis 11, **dadurch gekennzeichnet, dass** in Stufe (c) die Reaktion nach einer Heizzeit von 15 bis 200 Minuten durchgeführt wird.

13. Verfahren nach einem der Ansprüche 1 bis 12, **dadurch gekennzeichnet, dass** in Stufe (c) die Reaktionstemperatur 100 bis 200°C beträgt.

## Claims

1. Process for manufacturing a composition mainly containing compounds with ester and amide functions, in particular in the form of ester-amides, as well as compounds with amine functions, such as ester-amines, the salts of amines, monoglycerides and diglycerides, formed from monomeric, dimeric, trimeric and/or tetrameric fatty acids contained in a polymerised polyunsaturated oil, said process being **characterized in that** it comprises the following stages:
a) use (or preparation) of a polymerised oil by polymerisation of a polyunsaturated vegetable or animal oil;
b) treatment of said polymerised oil by entrainment with water vapour; and
c) reaction of the polymerised oil thus treated with an excess of at least one aminoalcohol,of which at least an amine function is primary or secondary, in the presence or not of a catalyst.

2. Process according to claim 1 **characterized in that**, in stage (a), a polymerised oil is prepared by polymerisation of a vegetable or animal oil with a high level of polyunsaturated acids, said polymerised oil having a dynamic viscosity of 5 to 65 Pa.s at 20°C.

3. Process according to claim 1 or 2 **characterized in that**, in stage (a), the polymerised oil is obtained by thermal polymerisation.

4. Process according to claim 1 or 2 **characterized in that**, in stage (a), the polymerised oil is obtained by catalytic polymerisation,

5. Process according to claim 4 **characterized in that** the catalyst used is manganese dioxide.

6. Process according to one of claims 1 to 5 **characterized in that** the starting polyunsaturated oil is linseed oil.

7. Process according to claim 1 to 6 **characterized in that**, in stage (b), a stream of dry water vapour is passed over the polymerised oil, in a quantity of 5 to 30% by weight relative to the oil, at a temperature of 180 to 250°C, under a vacuum of 7 to 2.5 kPa and for a period of 1 to 5 hours.

8. Process according to one of claims 1 to 7 **characterized in that** in stage (c), the molar ratio of the aminoalcohol to the polymerised oil, expressed as the moles of fatty acids which it contains, is from 1/1 to 2/1.

9. Process according to one of claims 1 to 8 **characterized in that** the reaction product of stage (c) is diluted in a solvent.

10. Process according to claim 9 **characterized in that** said solvent is chosen from the aromatic solvents, the fractions of aromatic solvents, monoalcohols, diols, all the esters of C1 to C4 monoalcohols and C6 to C22 fatty acids, deriving from vegetable or animal oils or fats, as well as the same pure esters.

11. Process according to one of claims 1 to 10 **characterized in that** the aminoalcohol used in stage (c) is diethanolamine.

12. Process according to one of claims 1 to 11 **characterized in that**, in stage (c), the reaction is completed after a heating time of 15 to 200 minutes.

13. Process according to one of claims 1 to 12 **characterized in that**, in stage (c), the reaction temperature is from 100 to 200°C.
